# FASCICULE DE BREVET EUROPEEN

(11) **EP 3 235 042 B1**
(45) Date de publication et mention de la délivrance du brevet: **18.07.2018**
(21) Numéro de dépôt: 15784084.4
(22) Date de dépôt: 02.10.2015
(51) Int. Cl.: H01M 8/2485, H01M 8/241, H01M 8/0258, H01M 8/0267, H01M 8/00, H01M 8/1018

(54) **EMPILEMENT DE CELLULES DE PILE À COMBUSTIBLE ET PILE À COMBUSTIBLE COMPRENANT UN TEL EMPILEMENT**
ZELLSTAPEL EINER BRENNSTOFFZELLE UND BRENNSTOFFZELLE MIT SOLCH EINEM STAPEL
STACK OF CELLS OF A FUEL CELL AND FUEL CELL COMPRISING SUCH A STACK

(30) Priorité: 16.12.2014 FR 1462517
(43) Date de publication de la demande: 25.10.2017
(73) Titulaire: L'Air Liquide Société Anonyme pour l'Etude et l'Exploitation des Procédés Georges Claude, 75007 Paris (FR)
(72) Inventeur: CERCEAU, Arnaud, 38850 Charavines (FR); PARIS, Marion, 38000 Grenoble (FR); PATRAS, Eric, 38000 Grenoble (FR); ROSSINOT, Elisabeth, 38112 Meaudre (FR); TROUVE, Hélène, 38360 Sassenage (FR)
(74) Mandataire: De Cuenca, Emmanuel Jaime
(86) Numéro de dépôt international: PCT/FR2015/052640
(87) Numéro de publication internationale: WO 2016/097504

(56) Documents cités:
- EP-A2- 0 975 039
- FR-A1- 2 997 560
- US-A1- 2002 058 177
- US-A1- 2006 110 649
- US-A1- 2010 068 599

## Description

La présente invention concerne un empilement de cellules de pile à combustible et une pile à combustible comprenant un tel empilement.

L'invention concerne plus particulièrement un empilement de cellules de pile à combustible à membrane échangeuse de protons dans lequel les cellules comprennent chacune une plaque anodique et une plaque cathodique prenant en sandwich un Assemblage Membrane Electrodes, chaque plaque comprenant deux faces opposées respectivement une face réactive et une face de refroidissement, la face réactive de chaque plaque étant destinée à faire face à l'Assemblage Membrane Electrodes et étant munie de reliefs et creux formant au moins un canal de circulation pour un réactif, la face de refroidissement définissant un chemin pour un fluide de refroidissement de la cellule, le au moins un canal de circulation pour un réactif ayant une entrée communiquant avec un orifice de distribution de réactif formé au travers de la plaque, la plaque comprenant en outre un orifice collecteur d'entrée de réactif qui est distinct de l'orifice de distribution de réactif, l'orifice collecteur d'entrée de réactif étant prévu pour alimenter en réactif l'entrée du canal via un passage situé sur la face de refroidissement et mettant en relation fluidique l'orifice collecteur d'entrée et l'orifice de distribution de réactif, chaque plaque comportant un joint d'étanchéité périphérique disposé sur la face réactive et comprenant une portion formant un boucle autour de l'orifice collecteur d'entrée.

Les cellules de pile à combustible (coté anode et côté cathode) génèrent de la chaleur (les réactions chimiques au sein de la cellule sont exothermiques) et doivent être refroidies par un circuit de refroidissement.

Dans le cas d'une cellule composée de deux plaques prenant en sandwich un Assemblage Membrane Electrodes, chaque plaque (anodique ou cathodique) comprend un côté dédié à la circulation des gaz réactif (air ou hydrogène en vis-à-vis de l'Assemblage Membrane Electrodes) et un côté (tourné vers l'extérieur de la cellule) dédié à la circulation du fluide (liquide) de refroidissement.

Ainsi, à chaque extrémité d'un empilement il est nécessaire de fermer le circuit du fluide de refroidissement. En effet, un empilement de cellules se terminant par une moitié de circuit de refroidissement, il est donc nécessaire, pour ces dernières demi-cellules de trouver un moyen pour fermer ce demi-circuit de refroidissement.

En particulier, le passage de liquide de refroidissement via des collecteurs internes nécessite d'étancher correctement l'interface entre la dernière demi-cellule et l'extrémité de la pile, tout en assurant un refroidissement efficace de la dernière demi-cellule active d'empilement.

Un but de la présente invention est de résoudre ce problème de façon simple et peu coûteuse en palliant tout ou partie des inconvénients de l'art antérieur.

Le document FR2997560A1, considéré comme l'état de la technique le plus proche, décrit un empilement conforme au préambule de la revendication 1.

A cette fin, l'empilement de cellules de pile à combustible selon l'invention, par ailleurs conforme à la définition générique qu'en donne le préambule ci-dessus, est essentiellement caractérisé en ce que, à une première de ses deux extrémités, l'empilement est terminé par une première plaque d'extrémité anodique ou respectivement, cathodique, disposée sur la plaque d'extrémité cathodique ou, respectivement, anodique, de la dernière cellule de l'empilement, ladite première plaque d'extrémité délimitant un circuit pour le fluide de refroidissement de la dernière cellule, cette première plaque d'extrémité étant une plaque anodique respectivement cathodique, analogue aux plaques anodiques, respectivement cathodiques, des cellules mais étant dépourvue d'orifice de distribution de réactif.

Par ailleurs, des modes de réalisation de l'invention peuvent comporter l'une ou plusieurs des caractéristiques suivantes :
- à sa seconde extrémité, l'empilement est terminé par une seconde plaque d'extrémité cathodique ou respectivement, anodique, disposée sur la plaque cathodique ou, respectivement, anodique de la dernière cellule de l'empilement, ladite seconde plaque d'extrémité délimitant un circuit pour le fluide de refroidissement de la cellule d'extrémité de l'empilement et en ce que cette seconde plaque d'extrémité est une plaque cathodique, respectivement anodique, analogue aux plaques cathodiques, respectivement anodiques, des cellules mais étant dépourvue d'orifice de distribution,
- la seconde plaque d'extrémité est une plaque identique aux plaques cathodiques ou, respectivement anodiques, des cellules, excepté qu'elle ne comprend pas d'orifice de distribution,
- la première plaque d'extrémité est une plaque identique aux plaques anodiques ou, respectivement cathodiques, des cellules, excepté qu'elle ne comprend pas d'orifice de distribution,
- les plaques des cellules sont fabriquées par moulage et/ou usinage et/ou hydroformage et/ou emboutissage et/ou par impression en trois dimensions,
- les plaques des cellules sont moulées et en ce que la première plaque d'extrémité est une plaque identique aux plaques anodiques ou, respectivement cathodiques, des cellules, et obtenue par moulage et réalisation d'un bouchon au niveau de l'orifice de distribution lors du moulage,
- les plaques des cellules sont moulées et en ce que la seconde plaque d'extrémité est une plaque identique aux plaques anodiques ou, respectivement cathodiques, des cellules, et obtenue par moulage et réalisation d'un bouchon au niveau de l'orifice de distribution lors du moulage,
- au moins un canal de circulation de chaque plaque comporte une sortie avec un orifice d'évacuation de réactif formé au travers de la plaque, la plaque comprenant en outre un orifice collecteur de sortie de réactif qui est distinct de l'orifice d'évacuation, l'orifice collecteur de sortie étant prévu pour récupérer le réactif à la sortie du au moins un canal via un passage mettant en relation fluidique l'orifice collecteur de sortie et l'orifice d'évacuation,
- les plaques situées aux extrémités de l'empilement sont dépourvues d'orifice d'évacuation,
- la première plaque d'extrémité comporte une face de refroidissement définissant un chemin pour un fluide de refroidissement
- la seconde plaque d'extrémité comporte une face de refroidissement définissant un chemin pour un fluide refroidissement.

L'invention concerne également une pile à combustible comprenant un tel empilement dans lequel la première plaque d'extrémité est une plaque collectrice de courant.

Selon d'autres particularités possibles :
- la seconde plaque d'extrémité est une plaque collectrice de courant,
- en position d'utilisation, les plaques de l'empilement sont disposées dans des plans verticaux parallèles.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente de face, de façon schématique et partielle, de la face réactive d'une plaque de pile à combustible illustrant un premier détail d'un exemple de réalisation possible de l'invention,
- la figure 2 représente de face, de façon schématique et partielle, de la face réactive d'une plaque de pile à combustible illustrant un second détail d'un exemple de réalisation possible de l'invention,
- la figure 3 représente une vue en perspective, schématique et partielle, illustrant un exemple d'empilement de plaques de cellules d'une pile à combustible,
- la figure 4 représente une vue en coupe, schématique et partielle, illustrant un exemple de réalisation d'une extrémité d'un empilement de cellules de pile à combustible selon l'invention,
- la figure 5 représente une vue en perspective et en coupe, schématique et partielle, illustrant l'extrémité de l'empilement de la figure 4.

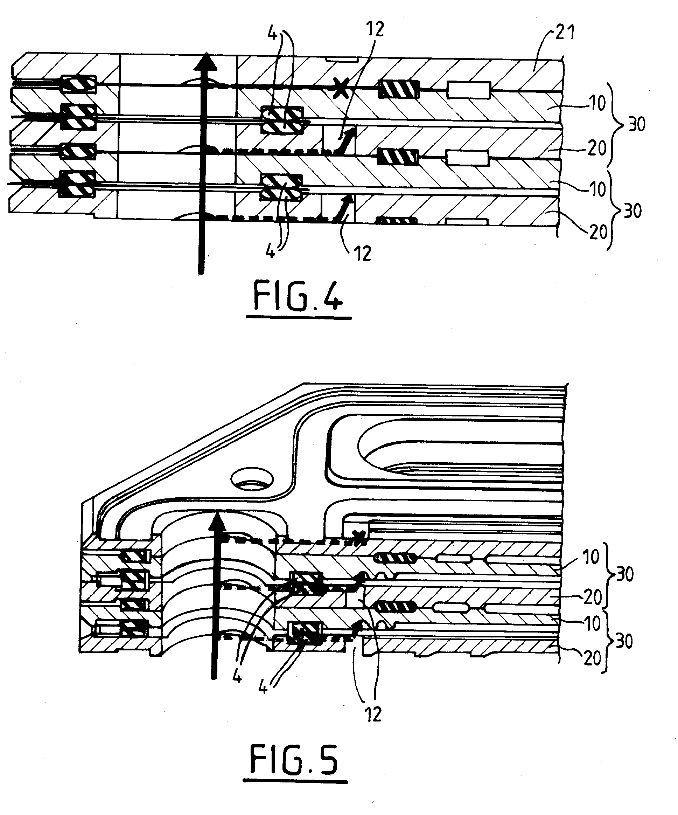

Comme illustré à la figure 4, les plaques 10, 20 de pile à combustible constituant les cellules 30 empilées comprennent deux faces opposées respectivement une face réactive et une face de refroidissement.

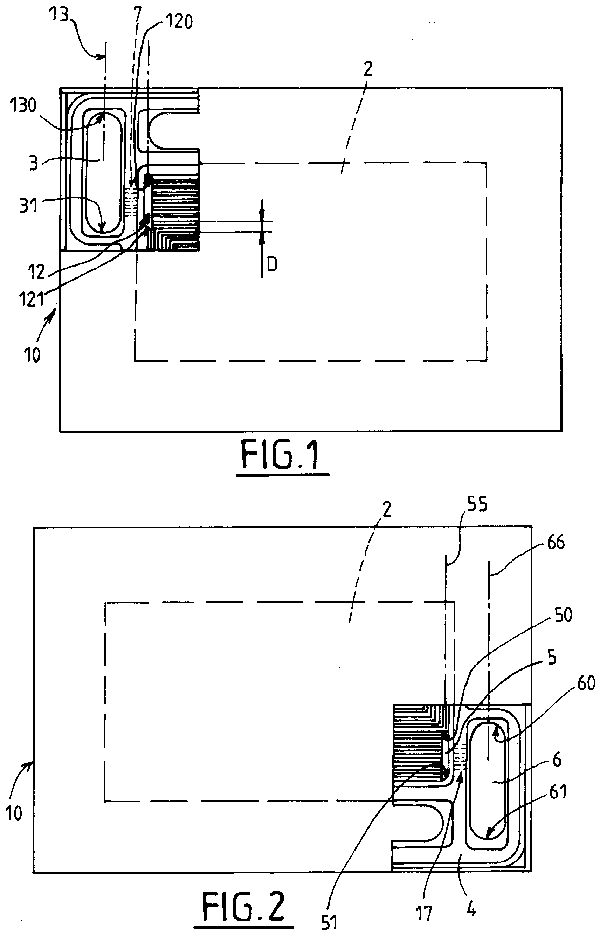

La figure 1 représente schématiquement et partiellement la face réactive d'une plaque 10 cathodique munie de reliefs et creux formant au moins un canal 2 de circulation pour un réactif.

Le canal 2 de circulation pour un réactif possède une entrée communiquant avec un orifice 12 de distribution de réactif formé au travers de la plaque 1. La plaque 1 comprend en outre un orifice collecteur 3 d'entrée de réactif qui est distinct de l'orifice 12 de distribution de réactif. L'orifice collecteur 3 d'entrée de réactif est prévu pour alimenter en réactif l'entrée du au moins un canal 2 via un passage 7 formé sur la face de refroidissement de la plaque 1 et mettant en relation fluidique l'orifice collecteur 3 d'entrée et l'orifice 12 de distribution de réactif (cf. également figures 4 et 5).

Ce passage 7 est schématisé par des pointillés et peut être formé par un ou plusieurs creux ou canaux formé(s) dans l'épaisseur de la plaque 10 au niveau de la séparation entre les deux orifices 3, 12.

C'est-à-dire que le gaz réactif arrive par l'orifice 3 collecteur puis transite via le passage le long de la face de refroidissement de la plaque jusqu'à l'orifice 12 de distribution. Le gaz traverse ensuite l'épaisseur de la plaque 10 via l'orifice 12 de distribution pour atteindre le canal 2 de circulation sur la face réactive.

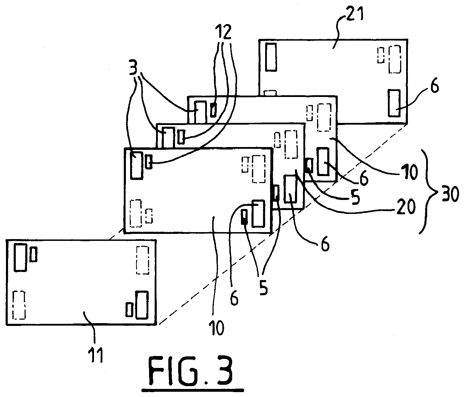

L'orifice collecteur 3 d'entrée peut s'étendre longitudinalement dans le plan de la plaque 1 selon une première direction 13 longitudinale entre une première extrémité 31 inférieure et une seconde extrémité 130 supérieure. L'orifice 12 de distribution peut s'étendre longitudinalement dans le plan de la plaque 10 selon une seconde direction 13 longitudinale entre une première extrémité 121 inférieure et une seconde extrémité 120 supérieure. Les première 13 et seconde 22 directions longitudinales sont par exemple parallèles entre elles et verticales lorsque la plaque 10 est en position d'utilisation verticale (cf. figure 3).

La figure 2 illustre l'agencement possible du collecteur 6 de sortie par rapport à l'orifice d'évacuation qui reçoit le gaz réactif en sortie du canal 2.

L'agencement du collecteur 6 de sortie par rapport à l'orifice 5 d'évacuation est par exemple symétriquement identique à ce qui précède par rapport au centre de la plaque 1 (l'extrémité inférieure 61 de l'orifice 6 collecteur peut être notamment située en dessous de l'extrémité inférieure de l'orifice 5 d'évacuation). De même, le collecteur 6 de sortie et l'orifice 5 d'évacuation peuvent avoir des formes oblongues s'étendant selon des directions 66, 55 respectives parallèles.

C'est-à-dire que les agencements des orifices 5 d'évacuation et du collecteur 6 de sortie peuvent être symétriquement identiques aux agencements respectivement de l'orifice 12 de distribution et du collecteur d'entrée 3. C'est-à-dire que les collecteurs 3, 6 peuvent être identiques et disposés symétriquement par rapport au centre de la plaque 1. De même, les orifices 12, 5 peuvent être identiques et disposés symétriquement par rapport au centre de la plaque 1. La plaque peut ainsi être symétrique au niveau de ses entrées et sorties. C'est-à-dire que la plaque n'a pas de côtés haut et bas et peut être montée sans nécessiter de détrompeur pour disposer l'entrée en haut et la sortie en bas ou inversement. Ceci facilite le montage de la pile.

L'orifice 5 d'évacuation est par exemple majoritairement positionné au-dessus du collecteur 6 de sortie. Ceci également évite une accumulation d'eau dans les canaux gaz et évite des « retours d'eau » du collecteur 6 de sortie vers l'orifice 5 d'évacuation.

Ces structures permettent ainsi une meilleur gestion de l'eau au niveau des entrée et sorties fluidiques (collecteurs 3, 6, orifices 12, 5), notamment aux basses températures.

Ceci permet d'amélioration de la performance et durée de vie de la cellule, de l'empilement de cellules et de la pile correspondants.

Classiquement, la face réactive de la plaque comprend un joint 4 périphérique délimitant les diverses entrées et sorties et notamment le joint délimite (entoure) le canal 2 de circulation. Le joint 4 comprend une portion formant un boucle autour de l'orifice collecteur 3 d'entrée (idem pour le collecteur de sortie 6). Le joint 4 est destiné à reposer sur l'Assemblage Membrane Electrodes pour séparer les différents circuits de fluide.

A une première de ses deux extrémités (extrémité dans le sens de l'empilement des plaques), l'empilement est terminé par une première plaque d'extrémité 21 anodique (ou respectivement, cathodique), disposée sur la plaque 10 d'extrémité cathodique (ou, respectivement, anodique) de la dernière cellule 30 de l'empilement (cf. figures 3 à 5).

Par exemple, et comme illustré aux figures 3 à 5, la dernière cellule 30 au sommet de l'empilement se termine par une plaque 10 cathodique et une première plaque d'extrémité supérieure 21 anodique est disposée sur cette dernière pour refermer le circuit de refroidissement.

Inversement, à l'autre extrémité de l'empilement, la dernière plaque 21 de la dernière cellule 30 est une plaque anodique recouverte d'une seconde plaque 11 d'extrémité cathodique.

Les plaque d'extrémité 11, 21 délimitent (referment) les circuits pour le fluide de refroidissement aux extrémités de l'empilement.

Selon une caractéristique avantageuse, ces plaques d'extrémité 11, 21 sont analogues respectivement aux plaques 10, 20 anodiques ou cathodiques respectivement mais sont dépourvues d'orifice de distribution de gaz.

Les première 21 et seconde 11 plaques d'extrémité n'autorisent ainsi que le passage du fluide refroidissement sans laisser passer les gaz réactif au travers de leur épaisseur.

Ceci permet d'éviter les risques de fuite de fluide réactif (hydrogène ou air par exemple lorsque ces derniers sont les réactifs utilisés par la pile) ainsi que la surconsommation des gaz. L'utilisation de ces plaques d'extrémité 11, 21 bouchées au niveau de l'orifice de distribution des gaz réactifs permet de refermer la dernière demi-cellule pour ce qui concerne le circuit refroidissement. Ceci assure par ailleurs une bonne étanchéité entre cette dernière demi-cellule et l'élément d'extrémité adjacent de la pile.

Après ces plaques 11, 21 d'extrémité, la pile peut comporter classiquement d'autres éléments tels que l'un au moins parmi : une plaque collectrice de courant, un système d'isolation thermique de l'empilement, un système de serrage de l'empilement...

De préférence, la plaque 11, 21 d'extrémité (anodique ou cathodique) est une plaque identique aux plaques anodiques ou, respectivement cathodiques, des cellules, excepté qu'elle ne comprend pas d'orifice de distribution.

La suppression de cet orifice 12 ou 5 peut être obtenue lors du moulage de la plaque (plastique et/ou composite) en ajoutant ou en modifiant ou en retirant par exemple un insert lors du moulage ou en supprimant l'étape de perçage de l'orifice de distribution pour réaliser une plaque bouchée à cet endroit.

Dans le cas où la plaque est fabriquée par usinage il suffira de programmer l'outil d'usinage pour ne pas prévoir cet orifice sur la plaque concernée. Dans le cas où la plaque est fabriquée par emboutissage ou hydroformage, le procédé de fabrication sera prévu pour ne pas générer cet orifice sur la plaque concernée. La plaque peut également être fabriquée par un procédé connu d'impression en trois dimensions (« impression 3D »).

Ceci permet de diminuer le coût de fabrication des plaques d'extrémité (modification mineure des plaques standard pour les cellules).

Cette solution présente de nombreux avantages. Ainsi, il n'est pas nécessaire de développer une pièce particulière à l'extrémité des empilements de cellules. Pour le moulage par exemple, il suffit en effet de positionner ou non un insert dans le moule qui sert à fabriquer les autres plaques des cellules. Pour les autres modes de fabrication évoqués, seule une petite adaptation est nécessaire par rapport aux plaques avec orifice(s).

Les plaques d'extrémité permettent de refermer simplement la dernière demi-cellule de l'empilement (circuit de refroidissement) en assurant une bonne étanchéité entre cette dernière demi-cellule et l'élément d'extrémité de la pile.

Cette structure permet également d'éviter les risques de fuite de réactifs. Les risques chimiques peuvent être évités par la dimension et l'intégration de cette ou ces plaques d'extrémité par rapports aux éléments d'extrémité de l'empilement (isolation chimique des différents réactifs).

D'ailleurs, les plaques d'extrémité bouchées peuvent le cas échéant servir de plaques collectrices de courant et donc réduire l'encombrement de l'empilement et le nombre d'éléments constituant ce dernier.

Le temps de montage de l'empilement est également réduit.

## Revendications

1. Empilement de cellules de pile à combustible à membrane échangeuse de protons dans lequel les cellules (30) comprennent chacune une plaque anodique (10) et une plaque (20) cathodique prenant en sandwich un Assemblage Membrane Electrodes (16), chaque plaque (10, 20) comprenant deux faces opposées respectivement une face réactive et une face de refroidissement, la face réactive de chaque plaque (10, 20) étant destinée à faire face à l'Assemblage Membrane Electrodes (16) et étant munie de reliefs et creux formant au moins un canal (2) de circulation pour un réactif, la face de refroidissement définissant un chemin pour un fluide de refroidissement de la cellule (30), le au moins un canal (2) de circulation pour un réactif ayant une entrée communiquant avec un orifice (12) de distribution de réactif formé au travers de la plaque (10, 20), la plaque (10, 20) comprenant en outre un orifice collecteur (3) d'entrée de réactif qui est distinct de l'orifice (12) de distribution de réactif, l'orifice collecteur (3) d'entrée de réactif étant prévu pour alimenter en réactif l'entrée du canal (2) via un passage (7) situé sur la face de refroidissement et mettant en relation fluidique l'orifice collecteur (3) d'entrée et l'orifice (12) de distribution de réactif, chaque plaque (10, 20) comportant un joint d'étanchéité (4) périphérique disposé sur la face réactive et comprenant une portion formant un boucle autour de l'orifice collecteur (3) d'entrée, **caractérisé en ce que**, à une première de ses deux extrémités, l'empilement est terminé par une première plaque d'extrémité (21) anodique ou respectivement, cathodique, disposée sur la plaque (10, 20) d'extrémité cathodique ou, respectivement, anodique, de la dernière cellule (30) de l'empilement, ladite première plaque d'extrémité (21) délimitant un circuit pour le fluide de refroidissement de la dernière cellule (30) et **en ce que** cette première plaque d'extrémité (21) est une plaque identique aux plaques anodiques ou, respectivement cathodiques, des cellules (30), excepté qu'elle ne comprend pas d'orifice de distribution.

2. Empilement selon la revendication 1, **caractérisé en ce que** à sa seconde extrémité, l'empilement est terminé par une seconde plaque d'extrémité (11) cathodique ou respectivement, anodique, disposée sur la plaque (20) cathodique ou, respectivement, anodique de la dernière cellule (30) de l'empilement, ladite seconde plaque d'extrémité (11) délimitant un circuit pour le fluide de refroidissement de la cellule (30) d'extrémité de l'empilement et **en ce que** cette seconde plaque d'extrémité (11) est une plaque cathodique, respectivement anodique, analogue aux plaques (20, 10) cathodiques, respectivement anodiques, des cellules (30) mais étant dépourvue d'orifice de distribution.

3. Empilement selon la revendication 2, **caractérisé en ce que** la seconde plaque d'extrémité (11) est une plaque identique aux plaques cathodiques ou, respectivement anodiques, des cellules (30), excepté qu'elle ne comprend pas d'orifice de distribution.

4. Empilement selon l'une quelconque des revendications 1 à 3, **caractérisé en ce que** les plaques des cellules (30) sont fabriquées par moulage et/ou usinage et/ou hydroformage et/ou emboutissage et/ou par impression en trois dimensions.

5. Empilement selon la revendication 4, **caractérisé en ce que** les plaques des cellules (30) sont moulées et **en ce que** la première plaque d'extrémité (21) est une plaque identique aux plaques anodiques ou, respectivement cathodiques, des cellules (30), et obtenue par moulage et réalisation d'un bouchon au niveau de l'orifice (12) de distribution lors du moulage.

6. Empilement selon la revendication 4 ou 5 prise en combinaison avec l'une quelconque des revendications 2 ou 3 **caractérisé en ce que** les plaques des cellules (30) sont moulées et **en ce que** la seconde plaque d'extrémité (11) est une plaque identique aux plaques anodiques ou, respectivement cathodiques, des cellules (30), et obtenue par moulage et réalisation d'un bouchon au niveau de l'orifice (12) de distribution lors du moulage.

7. Empilement selon l'une quelconque des revendications 1 à 6, **caractérisé en ce que** le au moins un canal (2) de circulation de chaque plaque (10, 20) comporte une sortie avec un orifice (5) d'évacuation de réactif formé au travers de la plaque (10, 20), la plaque (1) comprenant en outre un orifice collecteur (6) de sortie de réactif qui est distinct de l'orifice (5) d'évacuation, l'orifice collecteur (6) de sortie étant prévu pour récupérer le réactif à la sortie du au moins un canal (2) via un passage (17) mettant en relation fluidique l'orifice collecteur (6) de sortie et l'orifice (5) d'évacuation.

8. Empilement selon la revendication 7, **caractérisé en ce que** les plaques (11, 21) situées aux extrémités de l'empilement sont dépourvues d'orifice (5) d'évacuation.

9. Pile à combustible comprenant un empilement de cellules (30) selon l'une quelconque des revendications 1 à 8, **caractérisée en ce que** la première plaque d'extrémité (21) est une plaque collectrice de courant.

10. Pile à combustible selon la revendication 9, **caractérisée en ce que** la seconde plaque d'extrémité (11) est une plaque collectrice de courant.

11. Pile à combustible selon l'une quelconque des revendications 1 à 10, **caractérisée en ce que**, en position d'utilisation, les plaques (10, 20, 11, 21) de l'empilement sont disposées dans des plans verticaux parallèles.

## Patentansprüche

1. Protonenaustauschmembran-Brennstoffzellenstapel, wobei die Zellen (30) jeweils eine Anodenplatte (10) und eine Kathodenplatte (20) umfassen, die eine Elektroden-Membran-Einheit (16) einschließen, wobei jede Platte (10, 20) zwei gegenüberliegende Flächen umfasst, jeweils eine reaktive Fläche und eine Kühlfläche, wobei die reaktive Fläche jeder Platte (10, 20) dazu bestimmt ist, der Elektroden-Membran-Einheit (16) zugewandt zu sein und mit Erhöhungen und Vertiefungen versehen ist, die mindestens einen Umlaufkanal (2) für ein Reagenz bilden, die Kühlfläche einen Weg für ein Kühlfluid der Zelle (30) definiert, wobei der mindestens eine Umlaufkanal (2) für ein Reagenz einen Einlass aufweist, der mit einer durch die Platte (10, 20) gehenden Reagenzverteilöffnung (12) in Verbindung steht, wobei die Platte (10, 20) weiter eine Reagenzeinlass-Sammelöffnung (3) umfasst, die sich von der Reagenzverteilöffnung (12) unterscheidet, wobei die Reagenzeinlass-Sammelöffnung (3) dafür vorgesehen ist, dem Einlass des Kanals (2) über einen Durchgang (7) Reagenz zuzuführen, der auf der Kühlfläche angeordnet ist, und die Einlass-Sammelöffnung (3) und die Reagenzverteilöffnung (12) fluidisch verbindet, wobei jede Platte (10, 20) eine Umfangsdichtung (4) aufweist, die auf der reaktiven Fläche angeordnet ist und einen Abschnitt aufweist, der eine Schleife um die Einlass-Sammelöffnung (3) bildet, **dadurch gekennzeichnet, dass** an einem ersten seiner beiden Enden der Stapel durch eine erste anodische oder jeweils kathodische Endplatte (21) abgeschlossen ist, die auf der kathodischen oder jeweils anodischen Endplatte (10, 20) der letzten Zelle (30) des Stapels angeordnet ist, wobei die erste Endplatte (21) einen Kreislauf für das Kühlfluid der letzten Zelle (30) begrenzt und dadurch, dass diese erste Endplatte (21) eine Platte ist, die den anodischen oder jeweils kathodischen Platten der Zellen (30) gleich ist, abgesehen davon, dass sie keine Verteilöffnung umfasst.

2. Stapel nach Anspruch 1, **dadurch gekennzeichnet, dass** der Stapel an seinem zweiten Ende durch eine zweite kathodische oder jeweils anodische Endplatte (11) abgeschlossen ist, die auf der kathodischen oder jeweils anodischen Platte (20) der letzten Zelle (30) des Stapels angeordnet ist, wobei die zweite Endplatte (11) einen Kreislauf für das Kühlfluid der Endzelle (30) des Stapels begrenzt, und dadurch, dass die zweite Endplatte (11) eine kathodische oder jeweils anodische Platte analog zu den kathodischen oder jeweils anodischen Platten (20, 10) der Zellen (30) ist, jedoch mit keiner Verteilöffnung versehen ist.

3. Stapel nach Anspruch 2, **dadurch gekennzeichnet, dass** die zweite Endplatte (11) eine den kathodischen oder jeweils anodischen Platten der Zellen (30) gleiche Platte ist, abgesehen davon, dass sie keine Verteilöffnung umfasst.

4. Stapel nach einem der Ansprüche 1 bis 3, **dadurch gekennzeichnet, dass** die Platten der Zellen (30) durch Gießen und/oder Bearbeiten und/oder Hydroformen und/oder Tiefziehen und/oder dreidimensionales Drucken hergestellt sind.

5. Stapel nach Anspruch 4, **dadurch gekennzeichnet, dass** die Platten der Zellen (30) geformt sind und dadurch, dass die erste Endplatte (21) mit den anodischen oder jeweils kathodischen Platten der Zellen (30) gleich ist und dass sie durch Formen und Herstellen eines Stopfens an der Verteilöffnung (12) während des Formens erhalten wird.

6. Stapel nach Anspruch 4 oder 5 in Kombination mit einem der Ansprüche 2 oder 3, **dadurch gekennzeichnet, dass** die Platten der Zellen (30) geformt sind und dass die zweite Endplatte (11) eine Platte ist, die den anodischen oder jeweils kathodischen Platten der Zellen (30) gleich ist, die durch Formen und Herstellen eines Stopfens an der Verteilöffnung (12) während des Formens erhalten wird.

7. Stapel nach einem der Ansprüche 1 bis 6, **dadurch gekennzeichnet, dass** der mindestens eine Umlaufkanal (2) jeder Platte (10, 20) einen Auslass mit einer durch die Platte (10, 20) gehenden Reagenzauslassöffnung (5) umfasst, die Platte (1) weiter eine Reagenzauslass-Sammelöffnung (6) aufweist, die sich von der Auslassöffnung (5) unterscheidet, wobei die Auslass-Sammelöffnung (6) dafür vorgesehen ist, das Reagenz am Auslass des mindestens einen Kanals (2) über einen Durchgang (17) aufzufangen, der die Auslass-Sammelöffnung (6) und die Auslassöffnung (5) fluidisch verbindet.

8. Stapel nach Anspruch 7, **dadurch gekennzeichnet, dass** die an den Enden des Stapels befindlichen Platten (11, 21) mit keiner Auslassöffnung (5) versehen sind.

9. Brennstoffzelle, einen Stapel von Zellen (30) nach einem der Ansprüche 1 bis 8 umfassend, **dadurch gekennzeichnet, dass** die erste Endplatte (21) eine Stromkollektorplatte ist.

10. Brennstoffzelle nach Anspruch 9, **dadurch gekennzeichnet, dass** die zweite Endplatte (11) eine Stromkollektorplatte ist.

11. Brennstoffzelle nach einem der Ansprüche 1 bis 10, **dadurch gekennzeichnet, dass** die Platten (10, 20, 11, 21) des Stapels in der Gebrauchslage in parallelen vertikalen Ebenen angeordnet sind.

## Claims

1. Stack of proton exchange membrane fuel cells, wherein the cells (30) each comprise an anodic plate (10) and a cathodic plate (20) sandwiching an Electrode Membrane Assembly (16), each plate (10, 20) comprising two opposing faces, respectively a reactive face and a cooling face, the reactive face of each plate (10, 20) being intended to face the Electrode Membrane Assembly (16) and being equipped with elevations and cavities forming at least one circulation channel (2) for a reagent, the cooling face defining a pathway for a fluid for cooling the cell (30), the at least one circulation channel (2) for a reagent having an inlet communicating with an orifice (12) for distributing reagent formed through the plate (10, 20), the plate (10, 20) further comprising an inlet orifice (3) for collecting reagent which is separate from the reagent distribution orifice (12), the inlet orifice (3) for collecting reagent being provided to provide the inlet of the channel (2) with reagent via a passage (7) situated on the cooling face and fluidly linking the inlet orifice (3) for collecting reagent and the reagent distribution orifice (12), each plate (10, 20) comprising a peripheral seal (4) arranged on the reactive face and comprising a portion forming a loop around the inlet collecting orifice (3), **characterised in that**, at a first of the two ends thereof, the stack is terminated by a first anodic or respectively, cathodic end plate (21), arranged on the cathodic or respectively, anodic end plate (10, 20) of the last cell (30) of the stack, said first end plate (21) delimiting a circuit for the cooling fluid of the last cell (30) and **in that** this first end plate (21) is an identical plate to the anodic or respectively, cathodic plates, of the cells (30), except that it comprises no distribution orifice.

2. Stack according to claim 1, **characterised in that** the second end thereof, the stack is terminated by a second cathodic or respectively, anodic end plate (11), arranged on the cathodic or respectively, anodic plate (20) of the last cell (30) of the stack, said second end plate (11) delimiting a circuit for the cooling fluid of the end cell (30) of the stack and **in that** this second end plate (11) is a cathodic, respectively anodic, plate, similar to the cathodic, respectively anodic, plates (20, 10) of the cells (30) but having no distribution orifice.

3. Stack according to claim 2, **characterised in that** the second end plate (11) is an identical plate to the cathodic or respectively, anodic plates, of the cells (30), except that it comprises no distribution orifice.

4. Stack according to any one of claims 1 to 3, **characterised in that** the plates of the cells (30) are produced by moulding and/or machining and/or hydroforming and/or stamping and/or by three-dimensional printing.

5. Stack according to claim 4, **characterised in that** the plates of the cells (30) are moulded and **in that** the first end plate (21) is an identical plate to the anodic, or respectively cathodic plates, of the cells (30), and obtained by moulding and creating a stopper at the level of the distribution orifice (12) during the moulding.

6. Stack according to claim 4 or 5 combined with any one of claims 2 or 3, **characterised in that** the plates of the cells (30) are moulded and **in that** the second end plate (11) is an identical plate to the anodic, or respectively cathodic plates, of the cells (30), and obtained by moulding and creating a stopper at the level of the distribution orifice (12) during the moulding.

7. Stack according to any one of claims 1 to 6, **characterised in that** the at least one circulation channel (2) of each plate (10, 20) comprises an outlet with an orifice (5) for releasing reagent formed through the plate (10, 20), the plate (1) further comprising an outlet orifice (6) for collecting reagent which is separate from the release orifice (5), the outlet collecting orifice (6) being provided to recover the reagent at the outlet of the at least one channel (2) via a passage (17) fluidly linking the outlet collecting orifice (6) and the release orifice (5).

8. Stack according to claim 7, **characterised in that** the plates (11, 21) situated at the ends of the stack have no release orifice (5).

9. Fuel cell comprising a stack of cells (30) according to any one of claims 1 to 8, **characterised in that** the first end plate (21) is a current-collecting plate.

10. Fuel cell according to claim 9, **characterised in that** the second end plate (11) is a current-collecting plate.

11. Fuel cell according to any one of claims 1 to 10, **characterised in that**, in position of use, the plates (10, 20, 11, 21) of the stack are arranged in parallel vertical planes.
